# EUROPÄISCHE PATENTSCHRIFT

(11) **EP 3 445 161 B1**
(45) Veröffentlichungstag und Bekanntmachung des Hinweises auf die Patenterteilung: **28.10.2020**
(21) Anmeldenummer: 17718852.1
(22) Anmeldetag: 07.04.2017
(51) Int. Cl.: A01J 5/007, A01J 7/02

(54) **VERFAHREN UND VORRICHTUNG ZUM BESTIMMEN VON PARAMETERN EINES SPÜLVORGANGS FÜR EINE MELKANLAGE**
METHOD AND DEVICE FOR DETERMINING PARAMETERS OF A RINSING PROCESS FOR A MILKING SYSTEM
PROCÉDÉ ET DISPOSITIF DESTINÉS À DÉTERMINER LES PARAMÈTRES D'UNE OPÉRATION DE RINÇAGE D'UNE INSTALLATION DE TRAITE

(30) Priorität: 18.04.2016 DE 102016107166; 11.07.2016 DE 102016112692
(43) Veröffentlichungstag der Anmeldung: 27.02.2019
(73) Patentinhaber: GEA Farm Technologies GmbH, 59199 Bönen (DE)
(72) Erfinder: BIELETZKI, Sascha, 59199 Bönen (DE)
(74) Vertreter: Kleine, Hubertus
(86) Internationale Anmeldenummer: PCT/EP2017/058431
(87) Internationale Veröffentlichungsnummer: WO 2017/182297

(56) Entgegenhaltungen:
- WO-A2-2010/142601
- GB-A- 2 475 249

## Beschreibung

Die Erfindung betrifft ein Verfahren zum Bestimmen von Parametern eines Spülvorgangs für eine Melkanlage, wobei bei dem Spülvorgang eine Spülflüssigkeit in Milchleitungen der Melkanlage zirkuliert und ausgespült wird. Die Erfindung betrifft weiterhin eine Vorrichtung, mit der das Verfahren durchgeführt werden kann. Siehe z.B. GB 2 475 249 A.

Zur Entfernung von Milchresten und gegebenenfalls sonstigen Verunreinigungen werden Melkanlagen regelmäßig durchspült. Zu diesem Zweck ist ein Vorratsbehälter für Spülflüssigkeit vorgesehen, von dem eine Spülleitung zu den einzelnen Komponenten der Melkanlage führt. Abzweige der Spülleitungen führen zu den einzelnen Melkbechern der Melkanlage, die zu diesem Zweck in eine spezielle Reinigungsposition gebracht werden. Die Spülflüssigkeit wird im Reinigungsvorgang durch die Melkbecher und alle sich anschließenden Milchleitungen einschließlich zwischengeschalteter Ventile geführt, wobei zumindest für eine bestimmte Zeit ein Kreislauf vorgesehen ist, so dass die Spülflüssigkeit mehrfach durch das System aus Vorratsbehältern, Spülleitungen und Milchleitungen zirkuliert. Anschließend wird das Spülmittel, gegebenenfalls wiederum mit mehrfacher Zirkulation, aus dem System ausgespült.

Der Vorratsbehälter kann dabei eigens für die Spülflüssigkeit vorgesehen sein. In einer alternativen Ausgestaltung ist bekannt, einen Milchsammelbehälter, in dem im Betrieb der Melkanlage die gemolkene Milch gesammelt und in einem Kühl- und Filterkreislauf vorgekühlt und gefiltert wird, zusätzlich als Vorratsbehälter für die Spülflüssigkeit eingesetzt wird. Bei einer derartigen Auslegung der Melkanlage wird zusätzlich zur Zirkulation des Spülmittels durch die Milchleitungen der Melkplätze auch der Kühl- und Filterkreislauf ausgehend von dem Vorratsbehälter durch Zirkulation und durch Ausspülen des Spülmittels gereinigt.

Der Ablauf des Reinigungsvorgangs ist durch eine Vielzahl von Parametern konfigurierbar. Diese Parameter betreffen Zeiten, für die bestimmte Ventile geöffnet und geschlossen werden, so dass bestimmte Flüssigkeitsmengen in das System einlaufen, im System zirkulieren und aus dem System abgelassen werden. Eine dabei wichtige grundlegende Systemgröße, aus der eine Vielzahl der genannten Parameter abgeleitet werden können, ist das Volumen der Spülflüssigkeit, die sich während des Zirkulierens in dem zu reinigenden System einschließlich der Spülleitungen befindet. Dieses Volumen gibt die Menge an Spülflüssigkeit an, die mindestens im Vorratsbehälter zur Verfügung stehen muss, um die Zirkulation durchführen zu können, ohne dass Luft in das zu reinigende System eingezogen wird. Idealerweise kann der Vorratsbehälter dieses Volumen aufnehmen. Möglicherweise ist der Vorratsbehälter kleiner. Bei dieser Konstellation wird fehlende Spülflüssigkeit während des Reinigungsvorgangs nachdosiert.

Bei großen Melkanlagen, beispielsweise Melkkarussellen mit mehreren 10 bis 100 Melkplätzen werden mehrere 100 Liter Spülflüssigkeit im Reinigungsvorgang benötigt. Wird regelmäßig zu viel Spülflüssigkeit vorgehalten, führt dieses zu einem enormen Mehrverbrauch an Wasser und Spülmittel, das der Spülflüssigkeit zugesetzt wird, was aus finanzieller und ökologischer Sicht nachteilig ist. Ein zu wenig an Spülflüssigkeit führt dagegen zu einem unbefriedigenden und aus hygienischen Gründen nicht zu vertretendem Spülergebnis. Teilweise werden Spülschritte des Spülvorgangs auch bei erhöhter Temperatur der Spülflüssigkeit durchgeführt. Eine zu große Menge an Spülflüssigkeit ist daher zusätzlich im Hinblick auf einen unnütz hohen Energieverbrauch des Spülvorgangs nachteilig.

Es ist eine Aufgabe der vorliegenden Erfindung, ein Verfahren bereitzustellen, mit dem eine benötigte Idealmenge an Spülflüssigkeit für den Spülvorgang der Melkanlage automatisiert und zuverlässig ermittelt werden kann, um Parameter des Spülvorgangs optimal einzustellen. Es ist eine weitere Aufgabe, eine Vorrichtung zur Durchführung des Verfahrens anzugeben.

Diese Aufgabe wird gelöst durch ein Verfahren bzw. eine Vorrichtung mit den Merkmalen des jeweiligen unabhängigen Anspruchs. Vorteilhafte Weiterbildungen und Ausgestaltungen sind Gegenstand der abhängigen Ansprüche.

Ein erfindungsgemäßes Verfahren der eingangs genannten Art weist die folgenden Schritte auf: Es wird ein Vorratsbehälter für Spülflüssigkeit bis zu einem vordefinierten Füllstand mit einer Flüssigkeit, beispielsweise Wasser, befüllt. Anschließend wird die Flüssigkeit durch den zu spülenden Kreislauf, z.B. einen Melkkreis und/oder einem Kühlkreis einer Melkanlage, zirkuliert. Während der Zirkulation wird der Vorratsbehälter erneut bis zu dem vordefinierten Füllstand befüllt, wobei das dazu notwendige Flüssigkeitsvolumen ermittelt wird. Aus dem ermittelten Flüssigkeitsvolumen werden Parameter eines nachfolgenden Spülvorgangs bestimmt.

Bei den Verfahren wird ein Teil des Spülvorgangs simuliert, indem Flüssigkeit im zu spülenden Kreislauf zirkuliert wird. Während der Zirkulation sinkt der Füllstand im Vorratsbehälter durch das in dem zu spülenden Kreislauf zirkulierende Flüssigkeitsvolumen ab. Durch Auffüllen des Vorratsbehälters bis zu dem vor Beginn der Zirkulation vorliegenden Füllstand und Messen des eingelassenen Flüssigkeitsvolumens kann das im zu spülenden Kreislauf zirkulierende Flüssigkeitsvolumen ermittelt werden. Das Verfahren ermöglicht die Bestimmung des Volumens im zu spülenden System mit lediglich einem Füllstandsensor und einem Wassermengensensor, beispielsweise einem Durchflusssensor. Wenn eine Einlaufgeschwindigkeit der Flüssigkeit in den Vorratsbehälter (Füllrate) bekannt ist, kann die nachzufüllende Flüssigkeitsmenge sogar anhand der Einlaufzeit, die benötigt wird bis die Flüssigkeit wieder den vordefinierten oberen Füllstand erreicht hat, ermittelt werden. In dem Fall ist ein einzelner Sensor im System, nämlich der Füllstandsensor, der das Erreichen des vordefinierten Füllstands signalisiert, ausreichend. Es kann dann ein mit einem Schwimmer gekoppelter Schalter ("Schwimmerschalter") als Füllstandsensor verwendet werden. Ein derartiger Sensor ist als Überlaufsensor häufig bereits standardmäßig in Vorratsbehältern von Spülflüssigkeiten für Melkanlagen vorgesehen, so dass das beschriebene Verfahren umgesetzt werden kann, ohne dass bauliche Änderungen an den Spüleinrichtungen notwendig sind.

Die Füllrate kann dabei bestimmt werden, indem eine Gesamtfüllzeit ermittelt wird, die benötigt wird, um einen leeren Vorratsbehälter bis zu dem vordefinierten Füllstand aufzufüllen. Unter der Annahme, dass in der Gesamtfüllzeit ein Volumen eingefüllt wird, das dem Gesamtvolumen des Vorratsbehälters entspricht, kann die Füllrate aus dem Gesamtvolumen und der Gesamtfüllzeit berechnet werden. Bei bekanntem Gesamtvolumen kann so ebenfalls nur mit einem Schwimmerschalter als Füllstandsensor die Füllrate und anschließend das Volumen des zu spülenden Kreislaufs ermittelt werden.

In einer vorteilhaften Ausgestaltung weist das Verfahren folgende weitere Schritte auf, die nach dem Wiederauffüllen des Vorratsbehälters ausgeführt werden, während Flüssigkeit in den zu spülenden Kreis strömt. Es wird ein Anteil der Flüssigkeit aus dem zu spülenden Kreis für eine vorbestimmte Zeit abgelassen, d.h. nach Durchlaufen des Kreises verworfen und nicht zurück in den Vorratsbehälter geführt. Das dadurch aus dem Vorratsbehälter entfernte Volumen wird wiederaufgefüllt, während Flüssigkeit ansonsten weiter zirkuliert oder im Kreislauf steht. Es wird wiederum bis zu dem vordefinierten Füllstand aufgefüllt, wobei ein dazu notwendige Flüssigkeitsvolumen ermittelt wird. Aus dem ermittelten Flüssigkeitsvolumen und der vorbestimmte Zeit wird eine Durchflussrate des zu spülenden Kreises bestimmt. Die Parameter des nachfolgenden Spülvorgangs werden dann anhand des ermittelten Flüssigkeitsvolumens des zu spülenden Kreises und der ermittelten Durchflussrate bestimmt. Die Durchflussrate ist ebenfalls eine wichtige Systemgröße, die Einfluss auf die Parameter des Spülvorgangs hat. Sie kann durch das beschriebene Verfahren ebenfalls vorteilhaft automatisch ermittelt werden, wobei wiederum nur der Füllstandsensor benötigt wird. Bei bekannter Einlaufrate der Flüssigkeit kann das zur Berechnung benötigte Volumen der Flüssigkeit wiederum aus der Auffüllzeit bestimmt werden, wodurch auch Durchflussrate mit einem Schwimmerschalter als Füllstandsensor ermittelt werden kann.

Das beschrieben Verfahren kann mit kaltem Wasser als Flüssigkeit durchgeführt werden. Da sich Füll- und Durchflussraten bei heißem Wasser (und analog mit heißer Spülflüssigkeit) von denen des kalten Wassers unterscheiden können, wird in einer vorteilhaften Ausgestaltung insbesondere die Bestimmung der Durchflussrate zusätzlich mit heißem Wasser als Flüssigkeit durchgeführt. Dabei kann bevorzugt zusätzlich eine Aufwärmzeit ermittelt werden, die beim Zirkulieren der Flüssigkeit benötigt wird, bis Komponenten des zu spülenden Kreislaufs eine vorgegebene Temperatur erreicht haben. Die Aufwärmzeit kann vorteilhaft bei der Bestimmung der Parameter des nachfolgenden Spülvorgangs mitberücksichtigt werden, beispielsweise, indem Wartezeiten so angepasst werden, dass sich beim Spülen mit heißem Wasser auch alle zu spülenden Komponenten so aufwärmen, dass sie effektiv auch mit der heißen Spülflüssigkeit gespült werden.

Eine erfindungsgemäße Vorrichtung zeichnet sich durch eine Steuereinrichtung aus, die zur Durchführung des vorgenannten Verfahrens eingerichtet ist. Es ergeben sich die im Zusammenhang mit dem Verfahren genannten Vorteile. Bevorzugt ist die Steuereinrichtung dieselbe Einrichtung, die auch den Ablauf des Spülvorgangs steuert.

Die Erfindung wird nachfolgend anhand von Ausführungsbeispielen mithilfe von Figuren näher erläutert. Die Figuren zeigen:
- Figuren 1a - 1c: jeweils eine schematische Darstellung einer Melkanlage mit Spülvorrichtung in verschiedenen Stadien eines Spülvorgangs;
- Figur 2: ein Flussdiagramm eines anmeldungsgemäßen Verfahrens zur Einstellung von Parametern eines Spülvorgangs; und
- Figuren 3a bis 3e: jeweils eine schematische Darstellung eines Verfahrens zum Bestimmen von Parametern eines Spülvorgangs zu verschiedenen Stadien.

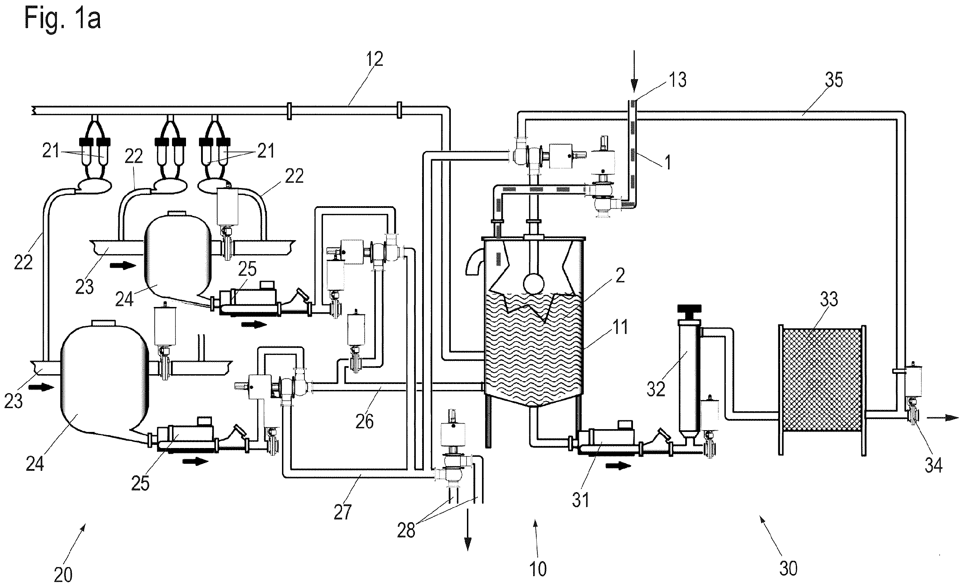

In den Figuren 1a bis 1c ist jeweils eine Melkanlage in einer schematischen Darstellung wiedergegeben. Jede der Figuren zeigt die Melkanlage in verschiedenen Stadien eines Spülvorgangs zum Reinigen von Leitungen und Komponenten von Milchresten.

Die Melkanlage umfasst eine Spülvorrichtung 10 mit einem Vorratsbehälter 11, in dem Spülflüssigkeit 2 vorgehalten wird. Die Spülflüssigkeit wird verwendet, um zwei Flüssigkeitskreise zu reinigen, einen Melkkreis 20 und einen Kühlkreis 30. Der Vorratsgehälter 11 für die Spülflüssigkeit wird bei dem dargestellten Ausführungsbeispiel im Melkbetrieb als Pufferbehälter innerhalb des Kühlkreises 30 verwendet, wobei der Kühlkreises 30 dazu dient, gemolkene Milch vorzukühlen. Das nachfolgend erläuterte erfindungsgemäße Verfahren zum Bestimmen und Einstellen von Parametern des Spülvorgangs kann mit einem derartigen Vorratsbehälter 11 durchgeführt werden, der Teil des Kühlkreislaufs 30 ist. Das Verfahren kann jedoch ebenso mit einem Vorratsbehälter durchgeführt werden, eigens für den Spülvorgang in der Melkanlage installiert ist.

Sowohl der Melkkreis 20 als auch der Kühlkreis 30 der Melkanlage sind in den Figuren 1a bis 1c nur schematisch skizziert. Aus Gründen der Übersichtlichkeit sind nicht alle dargestellten Komponenten mit Bezugszeichen versehen. Dieses betrifft insbesondere Ventile, die zur Steuerung des Melk- und auch des Reinigungsvorgangs eingesetzt werden.

Der Melkkreis 20 weist eine Mehrzahl von Melkbechern 21 auf, von denen vorliegend nur drei Sätze an Melkbechern 21 dargestellt sind. Die Melkbecher 21 sind über Milchleitungen 22 mit Milchsammelleitungen 23 gekoppelt. Im Melkvorgang wird durch Anlegen von Vakuum an die Milchsammelleitungen 23 der Melkvorgang durchgeführt. Die Milchsammelleitung 23 verläuft üblicherweise entlang einer Mehrzahl von Melkplätzen. Bei einer Melkanlage, die als Melkkarussell ausgebildet ist, ist die Milchsammelleitung 23 üblicherweise als eine Ringleitung ausgestaltet, die in mehrere Segmente unterteilt ist, wobei jedem Segment ein Milchabscheidebehälter 24 zugeordnet ist, in dem sich die gewonnene Milch sammelt. Von dort wird die Milch über Milchpumpen 25 abgepumpt, wobei eine nachgeschaltete Ventilanordnung eine Unterscheidung zwischen zu verwendender Milch und zu verwerfender Milch ermöglicht. Die zu verwendende Milch wird über eine Rückführungsleitung 26 in den Vorratsbehälter 11 geleitet, der im Melkbetrieb den Milchvorratsbehälter darstellt. Die zu verwerfende Milch wird über eine Ablassleitung 27 in einen Ablauf 28 geführt.

Über den Vorratsbehälter 11 ist der Melkkreis 20 mit dem Kühlkreis 30 verbunden. Im Melkbetrieb wird die im Vorratsbehälter 11 gesammelte Milch durch den Kühlkreis 30 gekühlt und in einen Milchtank transportiert. Zu diesem Zweck ist im Kühlkreis 30 eine Kühlkreispumpe 31 vorgesehen, die die Milch durch einen Milchfilter 32 und einen Kühler 33 pumpt. Vom Kühler 33 wird die Milch über eine Ventilanordnung durch einen Abgang 34 zu dem hier nicht dargestellten Milchtank gepumpt.

Die Figuren 1a bis 1c zeigen die Melkanlage nicht im Melkbetrieb, sondern während des Spülvorgangs, der zum Reinigen der Melkanlage von Milchresten dient. Zu diesem Zweck ist der Vorratsbehälter 11 über eine entsprechende Ventilanordnung mit einem Wasserzulauf 13 verbunden. Über den Wasserzulauf 13 besteht die Möglichkeit, kaltes und/oder heißes Wasser, gegebenenfalls bereits vermischt mit Spülmitteln, in den Vorratsbehälter 11 zu füllen. Dieser Befüllungsvorgang des Vorratsbehälters 11 ist in der Figur 1a dargestellt. Ausgehend vom Zulauf 13 ist zulaufende Flüssigkeit 1 durch eine gestrichelte Linie in den Leitungen zwischen dem Zulauf und dem Vorratsgehälter 11 dargestellt. Im Vorratsbehälter 11 sammelt sich entsprechend Flüssigkeit 2 an.

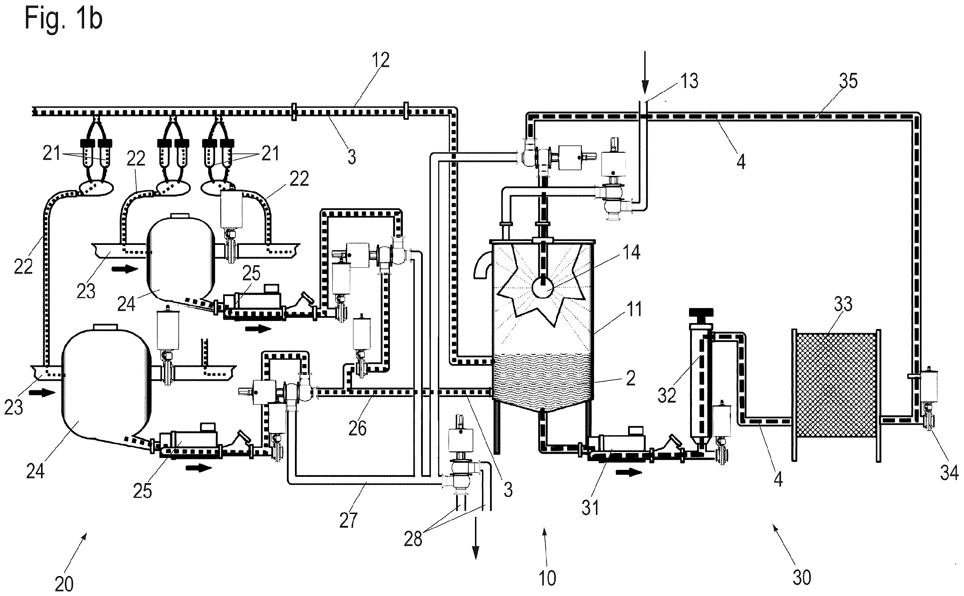

In Figur 1b ist ein Stadium des Spülvorgangs dargestellt, in dem die Flüssigkeit 2 aus dem Vorratsbehälter 11 kontinuierlich durch den Melkkreis 20 und den Kühlkreis 30 zirkuliert. Im Melkkreis 20 zirkulierende Flüssigkeit 3 ist durch eine punktierte Linie symbolisiert. Im Kühlkreis 30 zirkulierende Flüssigkeit 4 ist durch eine strichlinierte Linie dargestellt.

Zum Zirkulieren der Flüssigkeit 3 im Melkkreis 20 ist eine Spülleitung 12 vorgesehen, die von dem Vorratsbehälter 11 ausgeht und zu jedem Melkplatz führt.

Die Spülleitung 12 weist Abgänge auf, die vakuumdicht zu den einzelnen Melkbechern 21 führen. Üblicherweise ist zu diesem Zweck eine spezielle Reinigungsposition für die Melkbecher 21 an jedem Melkplatz vorgesehen, wobei in dieser Reinigungsposition die hydraulische Verbindung zwischen der Spülleitung 12 und den Melkbechern 21 und damit den Milchleitungen 22 gebildet ist.

Die Flüssigkeit 3 im Melkkreis 20 nimmt ausgehend von der Spülleitung 12 den Weg, den auch zu verwertende Milch während des Melkvorgangs bis zum Vorratsbehälter 11 genommen hat. Entsprechend werden alle Komponenten, die mit diesem Teil der Milch in Berührung gekommen sind, gespült. Die im Kühlkreis 30 zirkulierende Flüssigkeit 4 wird wie die zuvor durch den Kühlkreis 30 geführte Milch von der Kühlkreislaufpumpe 31 über den Milchfilter 32 und den Kühler 33 durch die Rückführungsleitung 35 zurück in den Vorratsbehälter 11 gepumpt. Der Auslass der Rückführungsleitung 35 im Vorratsbehälter 11 ist als ein so genannter "Sprayball" 14 ausgebildet, einer Kugel mit Löchern, die verteilt auf der Oberfläche der Kugel angeordnet sind. Die Flüssigkeit 4 wird somit im oberen Bereich des Vorratsbehälters 11 versprüht, um auch dessen Wände und dessen Deckel zu reinigen.

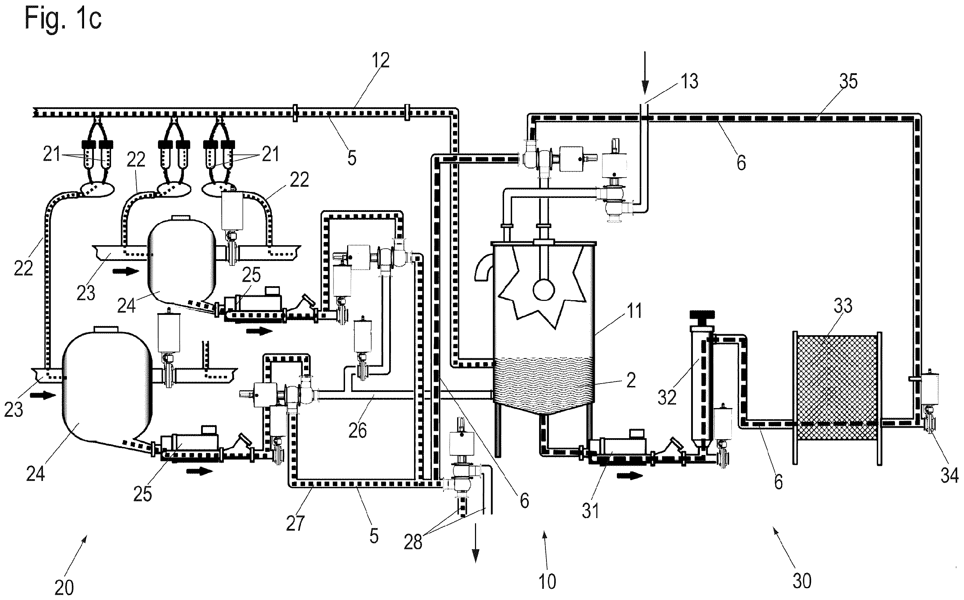

In Figur 1c ist schließlich ein Stadium des Spülvorgangs dargestellt, in dem Flüssigkeit 5 bzw. 6 im Melkkreislauf 20 bzw. Kühlkreis 30 nicht zirkuliert und wieder zum Vorratsbehälter 11 zurückgeführt wird, sondern durch entsprechende Ventilstellung zum Abfluss 28 geleitet wird. Auf diese Weise wird die Flüssigkeit 2 im Vorratsbehälter 11 abgelassen und es werden auch die Leitungen des Melkkreises 20, durch die zuvor die verworfene Milch abgelassen wurde, gereinigt.

Der dargestellte Spülvorgang sowohl des Melkkreises 20 als auch des Kühlkreises 30 findet üblicherweise in drei nacheinander ablaufenden Phasen statt, einer Klarspülphase, in der Milchreste zunächst ausgespült werden, einer Hauptspülphase, in der Warmwasser, gegebenenfalls mit chemischen Reinigungszusätzen versetzt, in den Melkkreis 20 und den Kühlkreis 30 zirkuliert und anschließend abgelassen wird und einer weiteren Klarspülphase, in der Reste des Reinigungsmittels ausgespült werden.

Wie aus den Figuren 1a bis 1c ersichtlich ist, ist der Auslass zum Kühlkreis 30 am Vorratsbehälter 11 an dessen tiefster Stelle angeordnet, um alle im Melkbetrieb aufgesammelte Milch auch aus dem Vorratsbehälter 11 ablassen zu können. Der Anschluss für die Spülleitung 12 ist dagegen oberhalb des tiefsten Punkts angeordnet. Wenn Flüssigkeit 3 durch den Melkkreis 2 zirkulieren soll, darf der Pegelstand der Flüssigkeit 2 im Vorratsbehälter nicht unter die Höhe des Anschlusses der Spülleitung 12 absinken. Die eingangs (vgl. Figur 1a) eingelassene Menge der Flüssigkeit 2 im Vorratsbehälter 11 ist so groß zu wählen, dass während des Zirkulierens der Flüssigkeiten 3 und 4 der Flüssigkeitsstand der Flüssigkeit 2 eine ausreichende Höhe beibehält. Wie weit die Flüssigkeit 2 absinkt, ist jedoch vom Volumen des Melkkreises 20 und gegebenenfalls des Kühlkreises 30 abhängig. Wird eine zu große Menge an Flüssigkeit 2 in den Vorratsbehälter 11 eingelassen, so führt dieses zu einem erhöhten Verbrauch an Flüssigkeit und gegebenenfalls Reinigungsmitteln sowie Energie zum Aufheizen der Flüssigkeit beim Spülvorgang.

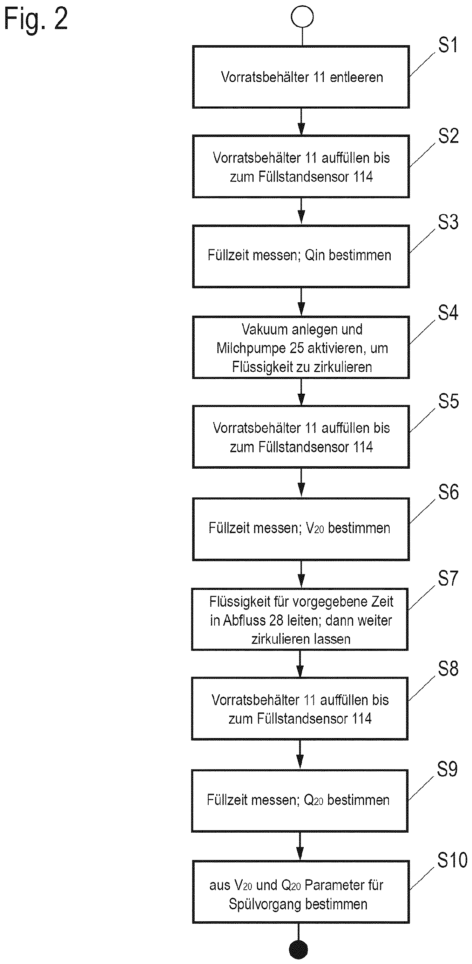

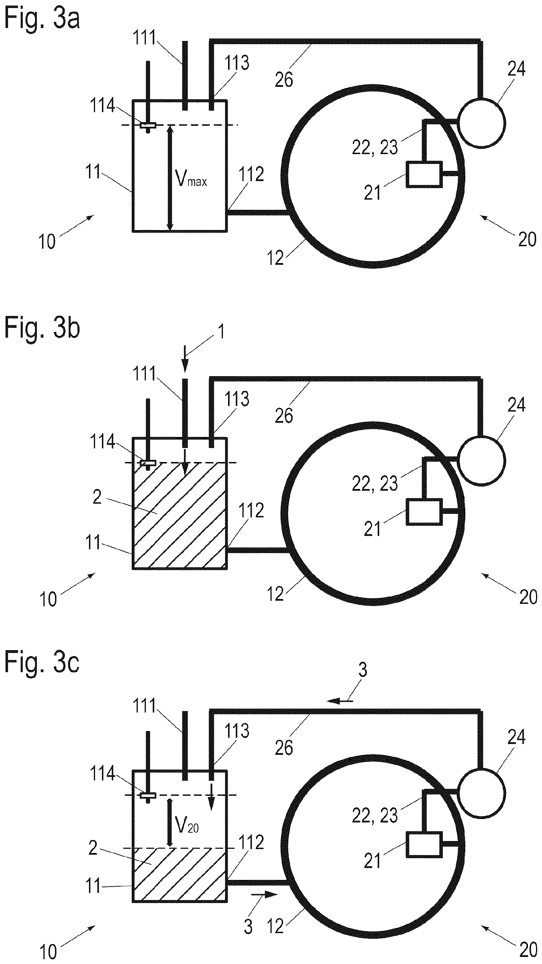

Das nachfolgend im Zusammenhang mit den Figuren 2 und 3a bis 3e beschriebene Verfahren zum Einstellen von Parametern des Spülvorgangs optimiert die verwendete Flüssigkeitsmenge.

Figur 2 zeigt ein Ausführungsbeispiel des Verfahrens in einem Flussdiagramm. Verschiedene Stadien, die im Laufe des Verfahrens eingenommen werden, sind in den Figuren 3a bis 3e, auf die bei der Beschreibung des Flussdiagramms der Figur 2 verwiesen wird, schematisch dargestellt. Das gezeigte Verfahren kann beispielsweise im Zusammenhang mit der Melkanlage gemäß der Figuren 1a bis 1c durchgeführt werden. Ebenfalls ist es denkbar, das Verfahren bei einer Spülvorrichtung 10 durchzuführen, deren Vorratsbehälter 11 ausschließlich zum Zwecke des Spülens eines Melkkreises 20 ausgelegt ist.

In einem ersten Schritt S1 werden der Vorratsbehälter 11 und alle weiteren Anlagenteile entleert. Der dann eingenommene Zustand ist in Figur 3a dargestellt. Der dort gezeigte Vorratsbehälter 11 weist einen Flüssigkeitseinlass 111 auf, über den Flüssigkeit zugeführt werden kann. Weiter ist ein Auslass 112 vorhanden, der in eine Spülleitung 12 übergeht, von der aus der Melkkreis 20 durchspült werden kann. Beispielhaft sind die Melkbecher 21 eines Melkzeugs mit Milchleitung 22 bzw. Milchsammelleitung 23 und Milchabscheidebehälter 24 dargestellt. Von den Milchabscheidebehältern 24 verläuft eine Rückführungsleitung 26 zurück zu einem Rücklaufanschluss 113 des Vorratsbehälters 11.

Weiterhin ist im Vorratsbehälter 11 ein Füllstandsensor 114 angeordnet, der als Schwimmerschalter ausgebildet ist und somit einen Füllstand erkennt, wenn dieser im Bereich des Schaltpunkts des Schwimmerschalters liegt. Für das Folgende wird davon ausgegangen, dass der Füllstandsensor 114 manuell in seiner Position, insbesondere der Höhe, in der er angeordnet ist, verändert werden kann.

In einem nächsten Schritt S2 wird der Vorratsbehälter 11 aufgefüllt, indem Flüssigkeit, vorzugsweise zunächst kaltes Wasser, über den Einlass 111 in den Vorratsbehälter 11 eingelassen wird. Der Füllstandsensor 114 ist für diesen Vorgang so hoch wie möglich angeordnet, so dass der Füllstandsensor 114 nach Möglichkeit erst dann auslöst, wenn der Vorratsbehälter 11 vollständig oder bis zu einer Höhe knapp unterhalb eines Überlaufs mit Flüssigkeit gefüllt ist. Dieser Zustand ist Figur 3b dargestellt.

Dabei wird während des Auffüllens des Vorratsbehälters 11 die Zeit gemessen, die das Auffüllen benötigt. Mit dieser gemessenen Zeit und einem bekannten Volumen Vₘₐₓ des Vorratsbehälters 11 wird in einem Schritt S3 eine Füllrate Qin der Flüssigkeit beim Einlaufen in den Vorratsbehälter 11 bestimmt. Die Füllrate Qin gibt an, welche Flüssigkeitsmenge pro Zeiteinheit einströmt. Falls die Füllrate Qᵢₙ anderweitig durch konstruktive Ausgestaltung des Systems, beispielsweise durch einen Durchflussratenbegrenzer oder einen Durchflussratenmesser bekannt ist, kann auf das Messen und Berechnen der Füllrate Qin im Schritt S3 verzichtet werden.

In einem Schritt S4 wird ausgehend von dem vollständig gefüllten Vorratsbehälter 11 die Zirkulation der Flüssigkeit 2 durch den Melkkreis 20 gestartet. Dieses geschieht durch Anlegen von Vakuum an der Milchsammelleitung 23 sowie den Betrieb der Milchpumpen 25 (vgl. Fig. 1a-1c), die die Flüssigkeit aus den Milchabscheidebehältern 24 zurück zum Vorratsbehälter 11 pumpen. Beispielsweise können die Milchpumpen 25 gestartet werden, sobald ein gewisser Flüssigkeitsstand in den Milchabscheidebehältern 24 erreicht ist und gestoppt werden, bevorzugt mit einer gewissen Nachlaufzeit, sobald ein Minimalfüllstand in den Milchabscheidebehältern 24 erreicht oder unterschritten ist.

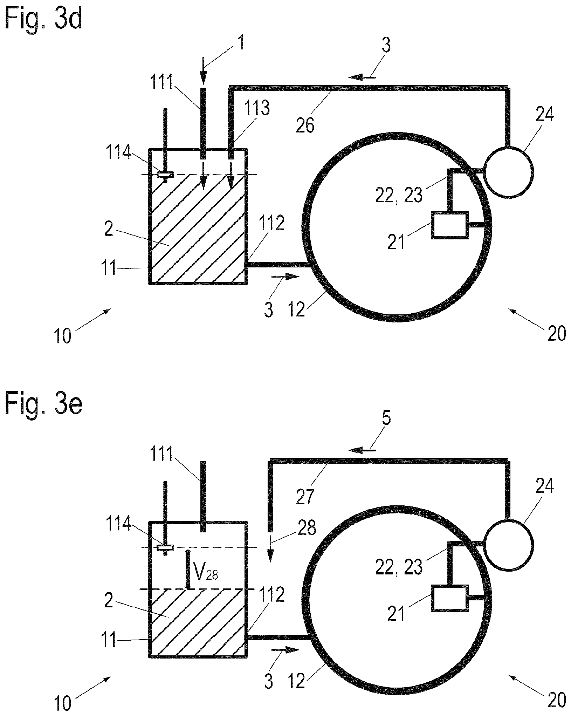

Wenn dieser Zirkulationsvorgang für eine Mindestzeit läuft, so dass der Melckreis 20 vollständig gefüllt ist, hat sich der Flüssigkeitsspiegel der Flüssigkeit 2 im Vorratsbehälter 11 abgesenkt, wie in Figur 3c dargestellt ist. Das bis zum Füllstand gemäß Figur 3b verbleibende Volumen V₂₀ entspricht dem Volumen (der Menge) der im Melkkreis 20 zirkulierenden Flüssigkeit. Dieses Volumen V₂₀ wird ermittelt, indem in einem Schritt S5 der Vorratsbehälter 11 wiederum bis zum Ansprechen des Füllstandsensors 114 aufgefüllt wird und die dafür benötigte Füllzeit gemessen wird. Das Auffüllen bei zirkulierender Flüssigkeit ist in Figur 3d dargestellt. In einem Schritt S6 wird mit der gemessenen Füllzeit und der aus dem Schritt S3 bekannten Füllrate Qin das Volumen V₂₀ ermittelt.

Anschließend wird in einem Schritt S7 für eine vorgegebene Zeit Flüssigkeit bei angelegtem Vakuum vom Vorratsbehälter 11 in den Melkkreis 20 gesaugt, jedoch nicht in den Vorratsbehälter 11 zurückgepumpt, sondern aus dem Melckreis 20 abgelassen. Entsprechend sinkt, wie in Figur 3e dargestellt, der Flüssigkeitsspiegel auf einen bestimmten Wert, der angibt, welches Flüssigkeitsvolumen in der vorgegebenen Zeit abgelassen werden konnte.

In einem folgenden Schritt S8 wird wiederum auf den Zirkulationsmodus geschaltet, so dass Flüssigkeit weiter durch den Melkkreis 20 geführt wird. Im Schritt S8 wird die abgelassene Menge wieder hinzugefügt, indem der Vorratsbehälter 11 wieder aufgefüllt wird und die dafür benötigte Zeit gemessen wird. Damit kann im Schritt S9 das im Schritt S7 abgelassene Volumen ermittelt werden. Mit Kenntnis der Zeit, die benötigt wurde, um dieses Volumen im Schritt S7abzulassen, kann eine Durchflussrate Q₂₀ bestimmt werden, mit der die Flüssigkeit vom Vorratsbehälter 11 über die Spülleitung 12 in den Melkkreis 20 fließt.

Die Durchflussrate Q₂₀ in dem Melkkreis 20 ist ebenfalls ein wichtiger Parameter, der bei dem vorliegenden Beispiel zusätzlich zum Volumen V₂₀ des Melckreises 20 in einem abschließenden Schritt S10 zur Einstellung der Parameter des Spülvorgangs verwendet wird. Der Spülvorgang kann sich anschließen.

Optional können weitere Systemeigenschaften bestimmt werden. In einem zusätzlichen Schritt können beispielsweise die Schritte S1 bis S3 wiederholt werden, wobei in diesem Fall nicht kaltes, sondern heißes Wasser eingelassen wird. Es können so die Füllraten für eine Heißwasserbefüllung des Vorratsbehälters 11 ermittelt werden. In einem weiteren Schritt kann ein Ableiten von Heißwasser aus dem Melkkreis 20 erfolgen, wobei ein optionaler Temperatursensor, der beispielsweise an der Rücklaufleitung 26 angeordnet ist, Aufschluss darüber gibt, nach welcher Zeit der Melkkreis 20 von der heißen Spülflüssigkeit aufgewärmt wird. Auch dieser Parameter ist für den Ablauf des Spülvorgangs relevant, da er bestimmte Wartezeiten des Spülvorgangs beeinflusst. Zudem kann die Durchflussrate von heißer Spülflüssigkeit analog zu den Schritten S7 bis S9 bestimmt werden. Alternativ kann angenommen werden, dass die Durchflussrate für heiße Spülflüssigkeit gleich der Durchflussrate der kalten Spülflüssigkeit ist.

Schließlich können die Messungen gemäß den Schritten S4 bis S6 erneut durchgeführt werden, diesmal jedoch nicht für eine Zirkulation der Flüssigkeit im Melkkreis 20, sondern für eine Zirkulation der Flüssigkeiten im Kühlkreis 30. Alternativ kann das Volumen des Kühlkreises 30 auch vorgegeben oder abgeschätzt werden, da es üblicherweise deutlich kleiner als das Volumen des Melkkreises 20 ist und sein Einfluss vernachlässigbar ist.

Wie eingangs erwähnt, ist es sinnvoll, zum Start des Spülvorgangs im Vorratsbehälter 11 nur eine Flüssigkeitsmenge bereitzustellen, die ausreichend ist, dass während des Spülvorgangs der Auslass 112, an dem die Spülleitung 12 angeschlossen ist, nicht trocken fällt. Aus den ermittelten Volumen V₂₀ des Melkkreises 20, plus gegebenenfalls dem abgeschätzten oder ermittelten Volumen des Kühlkreises 30 sowie einem Sicherheitszuschlag, kann bei bekannter Geometrie des Vorratsbehälters 11 nun berechnet werden, wie hoch der Füllstand im Vorratsbehälter 11 zu Beginn eines Spülvorgangs optimal sein sollte. Diese berechnete Höhenangabe kann im Verfahren ausgegeben werden, woraufhin händisch der Füllstandsensor 114 so eingestellt wird, dass er bei dieser gewünschten Füllhöhe auslöst. Bei nachfolgenden Spülvorgängen wird Flüssigkeit 2 für den Spülvorgang dann jeweils bis zum Auslösen des Füllstandsensors 114 eingefüllt.

Mit dem beschriebenen Verfahren kann eine vollständige und im Wesentlichen automatisierte Einstellung aller Parameter für den Spülvorgang erfolgen, wobei lediglich ein einzelner Sensor, vorliegend ein Schwimmerschalter, als Füllstandsensor 114 benötigt wird.

Falls anstelle des Schwimmerschalters ein Füllstandsensor verwendet wird, der einen analogen oder kontinuierlichen Wert für den Füllstand ausgibt, kann auf das Ermitteln der Füllraten in den Schritten S1 bis S3 verzichtet werden. Auch ist eine händische Anpassung des Schaltpunkts des Füllstandsensors 114 nicht erforderlich. Das Verfahren kann elektronisch so gesteuert werden, dass die gewünschte Füllhöhe jeweils zu Beginn eines Spülverfahrens bzw. eines neuen Abschnitts eines Spülverfahrens eingenommen wird.

### Bezugszeichenliste

- 1: zulaufende Flüssigkeit
- 2: Flüssigkeit im Vorratsbehälter
- 3: zirkulierende Flüssigkeit im Melkkreis
- 4: zirkulierende Flüssigkeit im Kühlkreis
- 5: ablaufende Flüssigkeit aus dem Melkkreis
- 6: ablaufende Flüssigkeit aus dem Kühlkreis

- 10: Spülvorrichtung
- 11: Vorratsbehälter
- 111: Einlass
- 112: Auslass
- 113: Rücklauf
- 114: Füllstandsensor
- 12: Spülleitung
- 13: Zulauf

- 20: Melkkreis
- 21: Melkbecher
- 22: Milchleitung
- 23: Milchsammelleitung
- 24: Milchabscheidebehälter
- 25: Milchpumpe
- 26: Rückführungsleitung
- 27: Ablassleitung
- 28: Abfluss

- 30: Kühlkreis
- 31: Kühlkreispumpe
- 32: Milchfilter
- 33: Kühler
- 34: Abgang zum Milchtank
- 35: Rückführungsleitung

## Patentansprüche

1. Verfahren zum Bestimmen von Parametern eines Spülvorgangs für eine Melkanlage, wobei bei dem Spülvorgang eine Spülflüssigkeit in einem zu spülenden Kreis zirkuliert, aufweisend die folgenden Schritte:
- Befüllen eines Vorratsbehälters (11) für Spülflüssigkeit bis zu einem vordefinierten Füllstand mit einer Flüssigkeit;
- Zirkulieren der Flüssigkeit aus dem Vorratsbehälters (11) durch den zu spülenden Kreis zurück in den Vorratsbehälter (11);
- Wiederauffüllen des Vorratsbehälters (11) während des Zirkulierens der Flüssigkeit bis zu dem vordefinierten Füllstand, wobei das dazu notwendige Flüssigkeitsvolumen (V₂₀) ermittelt wird; und
- Bestimmen von mindestens einem Parameter eines nachfolgenden Spülvorgangs anhand des ermittelten Flüssigkeitsvolumens (V₂₀).

2. Verfahren nach Anspruch 1, bei dem eine zum Wiederauffüllen des Vorratsbehälters (11) benötigte Zeit gemessen wird, und bei dem das Flüssigkeitsvolumen (V₂₀) aus der benötigten Zeit und einer bekannten Füllrate (Qᵢₙ) ermittelt wird.

3. Verfahren nach Anspruch 2, bei dem die Füllrate (Qᵢₙ) bestimmt wird, indem eine Gesamtfüllzeit bestimmt wird, die benötigt wird, um einen leeren Vorratsbehälter (11) bis zu dem vordefinierten Füllstand aufzufüllen, wobei das in der Gesamtfüllzeit eingefüllte Volumen gleich dem Gesamtvolumen (Vₘₐₓ) des Vorratsbehälters (11) angenommen wird.

4. Verfahren nach einem der Ansprüche 1 bis 3, mit den folgenden weiteren Schritten, die nach dem Wiederauffüllen des Vorratsbehälters (11) ausgeführt werden, während Flüssigkeit in den zu spülenden Kreis strömt:
- Ablassen eines Anteils der Flüssigkeit aus dem zu spülenden Kreis für eine vorbestimmte Zeit;
- Wiederauffüllen des Vorratsbehälters (11) während des Zirkulierens der Flüssigkeit bis zu dem vordefinierten Füllstand, wobei ein dazu notwendige Flüssigkeitsvolumen (V₂₈) ermittelt wird;
- Bestimmen einer Durchflussrate (Q₂₀) des zu spülenden Kreises anhand des ermittelten Flüssigkeitsvolumens (V₂₈) und der vorbestimmte Zeit; und
- Bestimmen der Parameter des nachfolgenden Spülvorgangs anhand des zuvor ermittelten Flüssigkeitsvolumens (V₂₀) und der ermittelten Durchflussrate (Q₂₀).

5. Verfahren nach einem der Ansprüche 1 bis 4, bei dem der zu spülende Kreislauf ein Melkkreis (20) der Melkanlage ist.

6. Verfahren nach einem der Ansprüche 1 bis 5, bei dem der zu spülende Kreislauf ein Kühlkreis (30) der Melkanlage ist.

7. Verfahren nach einem der Ansprüche 1 bis 6, bei dem kaltes und/oder heißes Wasser als Flüssigkeit verwendet wird.

8. Verfahren nach Anspruch 7, bei dem heißes Wasser als Flüssigkeit verwendet wird und bei dem eine Aufwärmzeit ermittelt wird, die beim Zirkulieren der Flüssigkeit benötigt wird, bis Komponenten des zu spülenden Kreislaufs eine vorgegebene Temperatur erreicht haben, wobei die der Parameter des nachfolgenden Spülvorgangs auch anhand der Aufwärmzeit bestimmt werden.

9. Vorrichtung zum Bestimmen von Parametern eines Spülvorgangs für eine Melkanlage, wobei bei dem Spülvorgang eine Spülflüssigkeit in einem zu spülenden Kreis zirkuliert, aufweisend eine Steuereinrichtung, die zur Durchführung eines Verfahrens gemäß einem der Ansprüche 1 bis 8 eingerichtet ist.

10. Vorrichtung nach Anspruch 9, bei dem die Steuereinrichtung auch zur Steuerung des Spülvorgangs eingerichtet ist.

## Claims

1. A method for determining parameters of a rinsing process for a milking system, wherein, in the rinsing process, a rinsing liquid circulates in a circuit to be rinsed, having the following steps:
- filling a storage tank (11) for rinsing liquid up to a predefined fill level with a liquid;
- circulating the liquid from the storage tank (11) through the circuit to be rinsed back into the storage tank (11);
- refilling the storage tank (11) during the circulation of the liquid up to the predefined fill level, wherein the liquid volume (V₂₀) required for that is determined; and
- determining at least one parameter of a subsequent rinsing process on the basis of the liquid volume (V₂₀) determined.

2. The method as claimed in claim 1, in which a time required for refilling the storage tank (11) is measured, and in which the liquid volume (V₂₀) is determined from the required time and a known filling rate (Qin).

3. The method as claimed in claim 2, in which the filling rate (Qin) is determined, in that a total filling time is determined, which is required in order to fill an empty storage tank (11) up to the predefined fill level, wherein the volume filled in the total filling time is assumed to be equal to the total volume (Vₘₐₓ) of the storage tank (11).

4. The method as claimed in one of claims 1 to 3, having the following further steps, which are executed after the refilling of the storage tank (11), while liquid flows into the circuit to be rinsed:
- draining a portion of the liquid from the circuit to be rinsed for a predetermined time;
- refilling the storage tank (11) during the circulation of the liquid up to the predefined fill level, wherein a liquid volume (V₂₈) required for that is determined;
- determining a flow rate (Q₂₀) of the circuit to be rinsed on the basis of the determined liquid volume (V₂₈) and the predetermined time; and
- determining the parameters of the following rinsing process on the basis of the previously determined liquid volume (V₂₀) and the determined flow rate (Q₂₀).

5. The method as claimed in one of claims 1 to 4, in which the circuit to be rinsed is a milking circuit (20) of the milking system.

6. The method as claimed in one of claims 1 to 5, in which the circuit to be rinsed is a cooling circuit (30) of the milking system.

7. The method as claimed in one of claims 1 to 6, in which cold and/or hot water is used as liquid.

8. The method as claimed in claim 7, in which hot water is used as liquid and in which a heating time is determined, which is required during the circulation of the liquid until components of the circuit to be rinsed have reached a predetermined temperature, wherein the parameters of the following rinsing process are also determined on the basis of the heating time.

9. A device for determining parameters of a rinsing process for a milking system, wherein, in the rinsing process, a rinsing liquid circulates in a circuit to be rinsed, having a control device which is set up for carrying out a method as claimed in one of claims 1 to 8.

10. The device as claimed in claim 9, in which the control device is also set up for controlling the rinsing process.

## Revendications

1. Procédé pour déterminer des paramètres d'un processus de rinçage pour une installation de traite, dans lequel, lors du processus de rinçage, un liquide de rinçage circule dans un circuit à rincer, comprenant les étapes suivantes :
- remplissage d'un réservoir de stockage (11) pour le liquide de rinçage jusqu'à un niveau de liquide prédéfini ;
- mise en circulation du liquide à partir du réservoir de stockage (11) à travers le circuit à rincer et en retour dans le réservoir de stockage (11) ;
- recharge du réservoir de stockage (11) pendant la circulation du liquide jusqu'au niveau de remplissage prédéfini, le volume de liquide (V₂₀) nécessaire à cet effet étant déterminé ; et
- détermination d'au moins un paramètre d'un processus de rinçage suivant à partir du volume de liquide déterminé (V₂₀).

2. Procédé selon la revendication 1, dans lequel un temps nécessaire pour recharger le réservoir de stockage (11) est mesuré, et dans lequel le volume de liquide (V₂₀) est déterminé à partir du temps nécessaire et d'une vitesse de remplissage connue (Qᵢₙ).

3. Procédé selon la revendication 2, dans lequel la vitesse de remplissage (Qᵢₙ) est déterminée en déterminant un temps de remplissage total qui est nécessaire pour remplir un réservoir de stockage vide (11) jusqu'au niveau de remplissage prédéfini, le volume rempli pendant le temps de remplissage total étant supposé être égal au volume total (Vₘₐₓ) du réservoir de stockage (11).

4. Procédé selon l'une des revendications 1 à 3, comprenant les étapes supplémentaires suivantes qui sont exécutées après la recharge du réservoir de stockage (11) pendant que le liquide circule dans le circuit à rincer :
- évacuation d'une partie du liquide du circuit à rincer pendant un temps prédéterminé ;
- recharge du réservoir de stockage (11) pendant la circulation du liquide jusqu'au niveau de remplissage prédéfini, un volume de liquide (V₂₈) nécessaire à cet effet étant déterminé ;
- détermination d'un débit (Q₂₀) du circuit à rincer à partir du volume de liquide déterminé (V₂₈) et du temps prédéterminé ; et
- détermination des paramètres du processus de rinçage suivant à partir du volume de liquide déterminé précédemment (V₂₀) et du débit déterminé (Q₂₀).

5. Procédé selon l'une des revendications 1 à 4, dans lequel le circuit à rincer est un circuit de traite (20) de l'installation de traite.

6. Procédé selon l'une des revendications 1 à 5, dans lequel le circuit à rincer est un circuit de refroidissement (30) de l'installation de traite.

7. Procédé selon l'une des revendications 1 à 6, dans lequel de l'eau froide et/ou chaude est utilisée comme liquide.

8. Procédé selon la revendication 7, dans lequel de l'eau chaude est utilisée comme liquide et dans lequel on détermine un temps de chauffe qui est nécessaire lors de la circulation du liquide jusqu'à ce que les composants du circuit à rincer aient atteint une température prédéfinie, les paramètres du processus de rinçage suivant étant également déterminés à partir du temps de chauffe.

9. Dispositif pour déterminer des paramètres d'un processus de rinçage pour une installation de traite, dans lequel, lors du processus de rinçage, un liquide de rinçage circule dans un circuit à rincer, présentant un moyen de commande qui est conçu pour mettre en œuvre un procédé selon l'une des revendications 1 à 8.

10. Dispositif selon la revendication 9, dans lequel le moyen de commande est également conçu pour commander le processus de rinçage.
